Europäisches Patentamt

European Patent Office

Office européen des brevets

(19)

(11) Veröffentlichungsnummer: **0 219 047**
**A2**

# (12) EUROPÄISCHE PATENTANMELDUNG

(21) Anmeldenummer: 86113882.4

(22) Anmeldetag: 07.10.86

(51) Int. Cl.4: **C08F 8/30** , C08G 59/42 , C08G 12/46

(30) Priorität: 11.10.85 DE 3536261

(43) Veröffentlichungstag der Anmeldung:
22.04.87 Patentblatt 87/17

(84) Benannte Vertragsstaaten:
AT DE ES FR GB IT NL SE

(71) Anmelder: BASF Aktiengesellschaft
Carl-Bosch-Strasse 38
D-6700 Ludwigshafen(DE)

(72) Erfinder: Blum, Rainer
Bannwasserstrasse 58
D-6700 Ludwigshafen(DE)
Erfinder: Osterloh, Rolf, Dr.
Am Wehrhaus 16a
D-6718 Gruenstadt(DE)
Erfinder: Neubert, Gerhard, Dr.
Panoramastrasse 11
D-6719 Battenberg(DE)
Erfinder: Auchter, Gerhard, Dr.
Gute Erde 13
D-6800 Mannheim 31(DE)

(54) Vernetzbare, in wässriger Lösung oder Dispersion lagerstabile polymere Zusammensetzungen, deren Herstellung und Verwendung.

(57) Die Erfindung betrifft vernetzbare, in Wasser gelöste oder dispergierte polymere Zusammensetzungen, Verfahren zu deren Herstellung und deren Verwendung.

Diese nach dem Auftrocknen bei Raumtemperatur oder erhöhter Temperatur vernetzenden polymeren Zusammensetzungen werden durch Umsetzung von polymeren organischen Verbindungen mit Carbonyl-und Carboxylgruppen mit Polyhydraziden in Gegenwart von Monoketonen oder Monoaldehyden erhalten und durch zumindest teilweise Neutralisation der Carboxylgruppen in Wasser gelöst bzw. dispergiert.

Sie eignen sich als Vernetzer und als Bindemittel für Beschichtungen auf flächigen Substraten.

EP 0 219 047 A2

## Vernetzbare, in wäßriger Lösung oder Dispersion lagerstabile polymere Zusammensetzungen, deren Herstellung und Verwendung

Die vorliegende Erfindung betrifft in wäßriger Lösung oder Dispersion lagerstabile, nach dem Auftrocknen bei Raumtemperatur oder erhöhter Temperatur vernetzende polymere Zusammensetzungen, Verfahren zu deren Herstellung sowie deren Verwendung.

Der Wunsch, Hydrazide bzw. Polyhydrazide und andere polymere Hydrazinabkömmlinge wegen ihrer vielfältigen Reaktionsmöglichkeiten technisch einzusetzen, z.B. für Klebe-und Dichtungsmittel oder dekorative und schützende Überzüge u.v.a., wird deutlich durch eine Reihe von Patentanmeldungen und Druckschriften, welche Herstellung und Verwendung polymerer Hydrazide beschreiben.

In der US-PS 4 171 413 wird die Herstellung von Polyacrylathydraziden beschrieben und auf die Schwierigkeit hingewiesen, hydrazinfreie Polyacrylhydrazide durch Umsetzung von Polyacrylaten mit Hydrazin zu erhalten, da bei hoher Temperatur, die für eine möglichst vollständige Umsetzung notwendig ist, die Produkte vorzeitig gelieren.

In der EP O OO3 516 werden wäßrige Polyacrylatdispersionen beschrieben, die in der Wasserphase wasserlösliche Hydrazide sowie einen Zusatz von Schwermetallionen enthalten. Der Zusatz von Schwermetallionen verhindert, daß sich aus den Hydraziden freies Hydrazin bildet. Die eingesetzten Hydrazide müssen hydrazinfrei sein. Methoden, hydrazinfreie Hydrazide oder hydrazinfreie Hydrazidlösungen zu erhalten, werden nicht angegeben.

Trotz der in diesen Schriften genannten Vorteile der Verwendung von Hydraziden und Polyhydraziden bzw. polymeren Hydrazidabkömmlingen haben solche Produkte nur wenig technische Verwendung gefunden.

Der Haupthinderungsgrund ist darin zu sehen, daß Hydrazin hochgiftig und krebserzeugend ist, d.h. für eine technische Verwendung darf in solchen Produkten kein freies Hydrazin mehr vorhanden sein und es sind extreme und teure Sicherheitsvorkehrungen erforderlich.

Soweit in der Literatur das Problem des freien Hydrazins in Zubereitungen für das Gebiet der Beschichtungs-, Verklebungs-und Dichtungsmittel überhaupt erwähnt wird, handelt es sich um Hinweise darauf, daß Hydrazin giftig ist und der Gehalt an freiem Hydrazin klein gehalten werden soll. In der US-PS 4 171 413 wird eine destillative Methode vorgeschlagen, mit der in Hydrazinolyseprodukten von Polyacrylestern ein Resthydrazingehalt von unter 1 % erreicht werden soll.

Wegen des vermuteten cancerogenen Potentials des Hydrazins kann ein Resthydrazingehalt überhaupt für viele Anwendungen nicht akzeptiert werden.

Ein weiterer Hinderungsgrund, der der Verwendung von polymeren Polyhydraziden und monomeren Polyhydraziden aus Lösungen, besonders auf dem Gebiet der Überzugs-, Verklebungs-und Dichtungsmittel entgegensteht, ist die Neigung solcher Lösungen, aufgrund von Wasserstoffbrückenbindungen oder anderen Selbstvernetzungsreaktionen zu gelieren oder bei Lagerung ihre Viskosität in einem anwendungstechnisch nicht mehr tolerierbaren Ausmaß zu erhöhen.

Ziel der vorliegenden Erfindung ist es, um zu möglichst hydrazinfreien, in wäßrigen Lösungen bzw. Dispersionen lagerstabilen Systemen zu gelangen, die trotzdem die in der zitierten Literatur genannten und weitere dem Fachmann bekannte, für Polyhydrazide typischen Vernetzungsfunktionen besitzen, insbesondere für die Anwendung auf dem Gebiet der Beschichtungs-, Verklebungs-und Dichtungsmittel.

Überraschenderweise wird dieses Ziel durch die erfindungsgemäßen polymeren Zusammensetzungen erreicht, die in monoketon-und/oder monoaldehydhaltigen wäßrigen Lösungen bzw. Dispersionen lagerstabil sind, beim Auftrocknen der Lösungen bzw. Dispersionen, nach Abdampfen oder teilweisem Abdampfen der Monoketone und/oder Monoaldehyde, spontan bei Raumtemperatur oder bei leicht erhöhter Temperatur vernetzen und deren Vernetzungsprinzip die Reaktion von Hydrazid-und/oder Hydrazon-und/oder Hydrazinocarbinol-Gruppen mit Carbonylgruppen ist, wobei die Hydrazidgruppen Hydrazon-und/oder Hydrazinocarbinolgruppen über Hydrazon und/oder Hydrazinocarbinol-Gruppen an die Polymeren gebunden sind. Die Carbonylgruppen können dabei an den gleichen Polymerketten vorhanden sein wie die Hydrazid-und/oder Hydrazon-und/oder Hydrazinocarbinol-Gruppen oder aber an anderen Polymerketten.

Gegenstand der Erfindung sind in wäßrigen Lösungen oder Dispersionen lagerstabile nach dem Auftrocknen bei Raumtemperatur oder erhöhter Temperatur vernetzende durch Umsetzung von

(A) polymeren organischen Verbindungen mit Carbonyl-und Carboxylgruppen mit

(B) Polyhydraziden

in Gegenwart von

(C) Monoketonen und/oder Monoaldehyden erhältliche und nach zumindest Teilneutralisation wasserlösliche oder in Wasser dispergierbare polymere Zusammensetzungen.

Der besondere Vorteil der vorliegenden Erfindung liegt darin, daß sie zur Einführung der vernetzenden Hydrazidstruktur in die Polymeren (A) nicht von Hydrazin, sondern von Hydraziden ausgeht, die nach den allgemein bekannten Methoden der präparativen Chemie vorgereinigt und damit von Hydrazin weitgehend befreit werden können, z.B. durch Umkristallisieren von kristallisierenden Hydraziden, z.B. Adipinsäurebishydrazid, Bernsteinsäurebishydrazid oder Phthalsäurebishydrazid, so daß sehr hydrazinarme Produkte erhalten werden.

Gegenstand der vorliegenden Erfindung sind auch Verfahren zur Herstellung der erfindungsgemäßen polymeren Zusammensetzungen, wobei man

a) entweder die Umsetzung der Komponenten (A) und (B) in Gegenwart von Komponente (C) in organischen Lösemitteln, die auch in einem Überschuß von Komponente (C) bestehen können, oder in Substanz, d.h. ohne Lösungsmittel durchführt, die erhaltenen Umsetzungsprodukte dann neutralisiert oder teilneutralisiert und in Wasser löst bzw. dispergiert, oder

b) die polymeren organischen Verbindungen (A) zunächst neutralisiert bzw. teilneutalisiert und in Wasser löst bzw. dispergiert und dann die Umsetzung von (A) mit Komponente (B) in Gegenwart von Komponente (C) durchführt.

Gegenstand der vorliegenden Erfindung ist auch die Verwendung der erfindungsgemäßen polymeren Zusammensetzungen als Vernetzer für Epoxidharze, wie höhermolekulare harzartige feste und/oder flüssige Polyepoxide, insbesondere für wassergelöste bzw. wasserdispergierte Epoxidharze, als Bindemittel für Beschichtungen auf flächigen harten oder weichen Substraten, als Klebemittel und als Haftkleber.

Die erfindungsgemäßen wäßrigen Lösungen bzw. Dispersionen können mit sich selbst vernetzen, wenn nicht alle Carbonylgruppen der polymeren Verbindung (A) mit Polyhydraziden (B) umgesetzt wurden, oder die so erhaltenen Umsetzungsprodukte als Vernetzer verwendet werden.

Als Reaktionspartner für die erfindungsgemäßen Reaktionsprodukte können zusätzlich weitere carbonyl-und carboxylgruppenhaltige Polymere verwendet werden, die von gleicher Zusammensetzung sein können wie die zur Umsetzung verwendeten polymeren Stoffe (A), oder aber von diesen verschieden sein können.

Zu den Aufbaukomponenten der erfindungsgemäßen Zusammensetzungen ist im einzelnen folgendes auszuführen:

Die Komponente (A):

Polymere organische Verbindungen mit Carboxylgruppen und Carbonylgruppen (Komponente A) können in üblicher Weise nach dem Stand der Technik nach verschiedenen Prinzipien erhalten werden. Diese polymeren organischen Verbindungen (A) an sich und ihre Gewinnung sind nicht Gegenstand der vorliegenden Erfindung. Im folgenden werden nur Beispiele für solche Stoffe angeführt. Diese Aufzählung ist nicht vollständig und dient nur der Erläuterung.

Geeignet sind z.B. Polymere, die durch Copolymerisation von carbonylgruppenfreien und carboxylgruppenfreien Monomeren mit Carbonylgruppen und Carboxylgruppen enthaltenden Monomeren hergestellt werden. Dabei können die Monomeren einheitlich oder verschieden sein.

Dazu gehören Copolymerisate von

a) (Meth)acrylsäureester von Alkoholen mit 1 bis 20 Kohlenstoffatomen, wie Methyl-, Ethyl-, Propyl-, n-, i-und t-Butyl-, Cyclohexyl-, 2-Ethylhexyl-, Decyl-, Lauryl-und Stearyl(meth)acrylat, von Vinylestern von 1 bis 20 Kohlenstoffatome enthaltenden Carbonsäuren wie Vinylformiat, -acetat, -propionat, -butyrat, -laurat und -stearat, von Vinylethern mit 3 bis 22 Kohlenstoffatomen wie Methyl-, Ethyl-, Butyl-, Hexyl-, Octadecylvinylether, von Vinylaromaten mit 8 bis 12 Kohlenstoffatomen wie Styrol, Methylstyrol, Vinyltoluole, t-Butylstyrol, Halogenstyrole, von Olefinen mit 2 bis 20 Kohlenstoffatomen wie Ethylen, Propylen, n-und i-Butylen, Diisobuten, Triisobuten, Oligopropylene, von Vinylhalogeniden wie Vinylchlorid, -bromid und Vinylidenchlorid, von Allylethern, Allylalkoholen und/oder Allylestern, unter

b) Mitverwendung copolymerisierbarer Carbonylverbindungen, z.B. alpha, ß-monoolefinisch ungesättigter Aldehyde und/oder Ketone, wie Acrolein, Methacrolein, Vinylalkylketone mit 1 bis 20 Kohlenstoffatomen im Alkylrest, Formylstyrol, -(Meth)acryloxyalkanale und -alkanone, deren Herstellung z.B. in der DE-OS 27 22 097 beschrieben ist, N-Oxoalkyl(meth)acrylamide, wie sie u.a. in der US-PS 4 226 007, der DE-OS 20 61 213 oder der DE-OS 22 07 209 beschrieben sind, z.B. N-3-Oxobutyl-acrylamid und -methacrylamid, N-1,1-Dimethyl-3-Oxobutyl(meth)acrylamid, Diaceton(meth)acrylamid, sowie N-3-Oxo-1,1-dibutyl-2-propyl-hexylacrylamid, ferner Acetonyl-und Diaceton(meth)acrylat oder Acrylamidopivalinaldehyd oder von Gemischen dieser Comonomeren. Bevorzugt werden 3-Oxoalkyl(meth)acrylate und N-3-Oxoalkyl(meth)acrylamide sowie Methylvinylketon und Methacrolein oder Acrolein, und mit

c) copolymerisierbaren Carboxylverbindungen, insbesondere alpha, ß-monoolefinisch ungesättigter Carbonsäuren z.B. Methacrylsäure und/oder Acrylsäure. Weitere bevorzugte Wege zur Einführung der Carboxylgruppen sind Copolymerisation von Maleinsäure, Maleinsäurehalbestern oder auch Maleinsäureanhydrid und nachfolgender Maleinsäurehalbesterbildung durch Umsetzung mit Alkoholen.

Zur Herstellung der Copolymerisate (A) können auch andere funktionelle Gruppen enthaltende Monomere mitverwendet werden, z.B. solche mit Hydroxylgruppen, wie Hydroxyalkyl(meth)acrylate, wie 2-Hydroxypropyl-acrylat und -methacrylat, 2-Hydroxyethyl-(meth)acrylat und 4-Hydroxybutyl-(meth)acrylat. Copolymerisate, die Hydroxylgruppen enthalten, können z.B. auch durch Umsetzung mit Dicarbonsäureanhydriden den erfindungsgemäßen Anteil an Carboxylgruppen erhalten.

Die Copolymerisate (A) weisen im allgemeinen K-Werte von 10 bis 200, vorzugsweise 10 bis 80 auf, bestimmt nach DIN 53 726.

Der Gehalt der Komponente (A) an Carboxylgruppen ist so zu wählen, daß nach der Neutralisation, bzw. Teilneutralisation Wasserverdünnbarkeit, bzw. Wasserdispergierbarkeit gegeben ist. Der dazu notwendige Mindestgehalt von Carboxylgruppen hängt auch vom Aufbau des Polymeren (A) ab; hydrophobe Bestandteile wie Styrol benötigen mehr Carboxylgruppen als hydrophilere Bestandteile wie niedere Acrylester. Die Copolymerisate - (A) weisen im allgemeinen Säurezahlen von ca. 5 bis 250, vorzugsweise 20 bis 100 auf.

Der Gehalt der Komponente (A) an Carbonylgruppen ist so zu wählen, daß die resultierende Vernetzungsdichte dem Verwendungszweck angepaßt ist, z.B. werden in der Praxis Verklebungsmittel deutlich niedriger vernetzt als z.B. Korrosionsschutzanstriche. Der Gehalt an Carbonylgruppen kann in Mol Carbonylgruppen pro 100 g Polymeren (A) angegeben werden; er beträgt im allgemeinen 0,01 -1,0, bevorzugt 0,05 -0,7 Mol Carbonylgruppen pro 100 g.

Die Komponente (B)

Geeignete Polyhydrazide sind z.B. Dihydrazide organischer Di-oder Oligocarbonsäuren, insbesondere solche von 3 bis 2c Kohlenstoffatomen. Als Beispiele seien genannt Malonsäure-, Bernsteinsäure-, Glutarsäure-, Adipinsäure-, Pimelinsäure-, Korksäure-, Azelainsäure-, Sebacinsäure-, Undecandisäure-, Dodecandisäure-, Tridecandisäure-, Tetradecandisäure-, Pentadecandisäure-, Hexadecandisäure-, 2-Methyl-tetradecandisäure-dihydrazid, ferner Methyl-, Ethyl-, Propyl-, Butyl-, Hexyl-, Heptyl-, Octyl-, 2-Ethylhexyl-, Nonyl-, Decyl-, Undecyl-und Dodecylmalonsäuredihydrazid, Methyl-, Ethyl-, Propyl-, Butyl-, Hexyl-, Heptyl-, Octyl-bernsteinsäure-dihydrazid, 2-Ethyl-3-propyl-bernstein-und - glutarsäuredihydrazid, Cyclohexandicarbonsäure- und Cyclohexylmethylmalonsäure-dihydrazid, Terephthalsäure-, Phenylbernsteinsäure-, Cinnamylmalonsäure-und Benzylmalonsäuredihydrazid, Pentan-1.3.5-tricarbonsäuretrihydrazid, Hex-4-en-1.2.6-tricarbonsäuretrihydrazid, 3-Cyan-pentan-1.3.5-tricarbonsäuretrihydrazid, Dicyanfumarsäuredihydrazid, ferner die Di-bzw. Oligohydrazide von dimerisierten bzw. oligomerisierten ungesättigten Fettsäuren.

Komponente (A) wird mit Komponente (B) im allgemeinen in solchen Mengen kombiniert, daß die Hydrazidgruppen der Komponente (B) zu Carbonylgruppen der Komponente (A) im Äquivalenzverhältnis von 0,1 zu 1, vorzugsweise 0,1 bis 0,9 steht.

Die Komponente (C)

Als Komponente (C) kommen übliche monofunktionelle Monoketone und Monoaldehyde in Frage, insbesondere Ketone und/oder Aldehyde mit jeweils Siedepunkten von 30°C bis 200°C, z.B. aliphatische, cycloaliphatische, aromatische und/oder araliphatische Ketone und Aldehyde, wie Acetaldehyd, Propionaldehyd, Butyraldehyd, Benzaldehyd, Phenylacetaldehyd und Terpenaldehyde; oder als Ketone z.B. Dialkylketone, wie Aceton, Methylethylketon, Diethylketon, i-Propylmethylketon, n-Propylmethylketon, Di-i-und Di-n-propylketon, t-Butylmethylketon, i-Butylmethylketon, sec.-Butylmethylketon, Di-isobutylketon, cycloaliphatische Ketone, wie Cyclohexanon und aromatisch-aliphatische Ketone wie Acetophenon. Bevorzugt werden Dialkylketone mit Siedepunkten von 50 bis 150°C verwendet.

Die Umsetzung der Komponenten (A), (B) und (C) erfolgt zweckmäßigerweise bei erhöhten Temperaturen von ca. 40 -120°C, um eine gewünschte rasche Reaktion zu erhalten. Es ist außerdem zweckmäßig, diese Umsetzung durch Säuren zu katalysieren. Im allgemeinen reichen die in den Polymerisa ten (A) vorhandenen Carboxylgruppen zur Katalyse aus, es können aber in untergeordneten Mengen weitere katalytisch wirkende Säuren zugesetzt werden, z.B. p-Toluolsulfonsäure, Phthalsäure und/oder Phosphorsäure.

Die Umsetzung kann in Substanz (d.h. ohne Lösemittel) durchgeführt werden, erfolgt aber zweckmäßigerweise in organischer Lösung oder Dispersion, um die meist hochviskosen Stoffe besser handhaben zu können. Die Verwendung von Lösemitteln, die mit Wasser mischbar sind, wird bevorzugt, z.B. in niederen Alkanolen, Diolen, Etheralkanolen. Es ist aber auch vorteilhaft, den Reaktionspartner (C), der in erheblichem äquivalenten Überschuß über die Komponenten (A) und (B) vorhanden sein kann, gleichzeitig als Lösemittel oder Colösemittel zu verwenden. Im allgemeinen wird man hohe Konzentrationen an Umsetzungsprodukten anstreben, z.B. mehr als 60%ige Lösungen oder Dispersionen.

Nach der Umsetzung erfolgt dann die Neutralisation oder Teilneutralisation der Polymeren, mit basischen Verbindungen, z.B. Aminen, insbesondere mit leichtflüchtigen Aminen, z.B. Methylamin, Ethylamin, Ethanolamin, um z.B. die Wasserfestigkeit der getrockneten Beschichtungen zu erhöhen; vorzugsweise verwendet man Ammoniak. Nach Zugabe von Wasser, im allgemeinen unter kräftigem Rühren, erhält man wäßrige Lösungen oder Dispersionen.

Es ist aber auch möglich, die Polymerisate (A) zunächst nach Neutralisation bzw. Teilneutralisation in wäßrige Lösungen zu überführen und dann die Umsetzung mit den Komponenten (B) und (C) durchzuführen.

Die erfindungsgemäßen Zusammensetzungen vernetzen nach dem Auftrag auf das zu überziehende Substrat nach dem Auftrocknen bereits bei Raumtemperatur; eine Erhöhung der Temperatur auf z.B. 40 bis 100°C dient zur Beschleunigung der Vernetzung (= forcierte Trocknung). Sie eignen sich als Beschichtungen - schützender und/oder dekorativer Art auf harten und weichen Substraten z.B. Metall, Leder, Papier und/oder Kunststoffen, als Klebemittel und Haftklebemittel auf den gleichen Substraten sowie als Bindemittel für Straßenmarkierungsfarben.

I. Herstellung der Lösung eines Polymerisats (A) in einem Monoketon (C)

In einem Reaktionsgefäß aus Glas wurden 125 g Methylethylketon auf 80°C erhitzt. Innerhalb von 2 Stunden wurde bei Rückfluß eine Mischung aus 200 g Ethylhexylacrylat, 225 g Styrol, 50 g Acrylsäure, 25 g Diacetonacrylamid und 25 g tert.-Butylperbenzoat zugetropft; nach Zulaufende wurde das Reaktionsgemisch noch eine Stunde am Rückfluß zum Sieden erhitzt und dann auf Raumtemperatur abgekühlt. Es resultierte eine ca. 80 Gew.-%ige Lösung eines Polymerisates (A) in einem Monoketon (C).

Beispiel 1

Die, wie unter I beschrieben, hergestellte Polymerlösung wurde mit 50 g Isoamylmethylketon und 13 g Adipinsäurebishydrazid 2 Stunden lang bei 65°C gerührt. Dabei ging das Adipinsäurebishydrazid in Lösung. Das Reaktionsgemisch wurde auf Raumtemperatur abgekühlt, dann wurden zunächst 78 g Ammoniak (25 Gew.-%ig) und anschließend 800 g entsalztes Wasser eingerührt. Man erhielt so eine ca. 40 Gew.-%ige trübe Lösung, die lagerstabil war, d.h. die ihre Viskosität über 20 Tage bei Raumtemperatur kaum änderte.

Beispiel 2

Die, wie unter I beschrieben, hergestellte Polymerlösung wurde mit 40 g Ammoniak (25 Gew.-%) versetzt. Dann wurden 50 g Isoamylketon und 400 g entsalztes Wasser eingerührt. Dabei resultierte eine weißtrübe Dispersion. Es wurden 13 g Adipinsäurebishydrazid zugegeben und 4 Stunden bei 50°C gerührt. Dann wurden nacheinander 38 g Ammoniak (25 Gew.-%ig) und 400 g Wasser eingerührt. Man erhielt so eine ca. 40 Gew.-%ige trübe Lösung.

II. Prüfung der erfindungsgemäßen Lösungen nach Beispiel 1 und 2

Die nach den Beispielen 1 oder 2 erhaltenen Lösungen wurden auf mehrere entfettete Aluminiumbleche mit einer Rakel mit 100 μm Spalthöhe aufgetragen, wodurch dann Trockenfilmdicken von ca. 35 μm erhalten wurden.

Als Test der Vernetzung wurden Pendeldämpfung und das Verhalten gegen Ethanol geprüft.

Die Prüfungen zeigen, daß bei relativ milder Wärmelagerung von 30 min bei 50°C schon weitgehend der Endpunkt der Vernetzung erreicht ist, der aber auch bei Raumtemperatur nach ca. 60 Stunden erreicht wird.

Die Lösungen nach Beispiel 1 und 2 sind z.B. als Bindemittel zur Formulierung von Korrosionsschutzfarben, wasserverdünnbaren Malerlacken, Fassadenanstrichen

Straßenmarkierungsfarben verwendbar.

oder

## Ansprüche

1. In wäßrigen Lösungen oder Dispersionen lagerstabile, nach dem Auftrocknen bei Raumtemperatur oder erhöhter Temperatur vernetzende polymere Zusammensetzungen, dadurch gekennzeichnet, daß die polymeren Zusammensetzungen durch Umsetzung von

polymeren organischen Verbindungen mit Carboxyl- und Carbonylgruppen (Komponente A) mit

T r o c k n u n g

| Filme aus Lösung nach | 1 Std. bei 25°C | 1 Std. bei 25°C 0 30 Min. bei 50°C | 24 Std. bei 25°C | 24 Std. bei 25°C 0 30 Min. bei 50°C | 60 Std. bei 25°C | 60 Std. bei 25°C 0 30 Min. bei 50°C |
|---|---|---|---|---|---|---|
| **Beispiel 1** | | | | | | |
| Pendelhärte x) | 42 | 112 | 67 | 117 | 109 | 120 |
| Ethanoltest xx) | löslich | geringfügig quellbar | stark quellbar | geringfügig quellbar | geringfügig quellbar | geringfügig quellbar |
| **Beispiel 2** | | | | | | |
| Pendelhärte | 36 | 118 | 61 | 122 | 114 | 122 |
| Ethanoltest | löslich | geringfügig quellbar | stark quellbar | geringfügig quellbar | geringfügig quellbar | geringfügig quellbar |

x) Pendelhärte in Sekunden (s) nach DIN 53 157

xx) ein mit Ethanol getränkter Wattebausch wird 2 Minuten lang auf den zu prüfenden Film aufgelegt, dann entfernt und der Film beurteilt.

Polyhydraziden (Komponente B) in Gegenwart von

monofunktionellen Monoketonen und/oder Monoaldehyden (Komponente C)

erhältlich und nach zumindest teilweiser Neutralisation der Carboxylgruppen in Wasser löslich bzw. dispergierbar sind.

2. Zusammensetzungen nach Anspruch 1, dadurch gekennzeichnet, daß als Komponente (A) polymere organische Verbindungen verwendet werden, die durch Copolymerisation von (Meth-)acrylsäureestern und gegebenenfalls anderen mit -(Meth-)acrylsäureestern copolymerisierbaren Verbindungen mit copolymerisierbaren Ketonen und/oder Aldehyden und copolymerisierbaren Carbonsäuren und/oder Carbonsäureanhydriden erhältlich sind.

3. Zusammensetzungen nach einem der Ansprüche 1 oder 2, dadurch gekennzeichnet, daß die Polyhydrazide (B) in einem Äquivalenzverhältnis, bezogen auf die Carbonylgruppen in (A), von O,1 bis 1 eingesetzt werden.

4. Verfahren zur Herstellung von Zusammensetzungen nach einem der Ansprüche 1 oder 2, dadurch gekennzeichnet, daß man die Umsetzung der Komponenten (A) und (B) in Gegenwart von Komponente (C) in organischen Lösemitteln, die auch in einem Überschuß von Komponente (C) bestehen können, oder in Substanz durchführt und die erhaltenen Umsetzungsprodukte dann neutralisiert oder teilneutralisiert und in Wasser löst bzw. dispergiert.

5. Verfahren zur Herstellung der Zusammensetzungen nach einem der Ansprüche 1 oder 2, dadurch gekennzeichnet, daß man die polymeren organischen Verbindungen der Komponente (A) zunächst neutralisiert bzw. teilneutralisiert und Wasser löst bzw. dispergiert und dann die Umsetzung von (A) mit Komponente (B) in Gegenwart von Komponente (C) durchführt.

6. Verwendung der Zusammensetzungen nach einem der Ansprüche 1 bis 3 als Vernetzer für weitere Polymere mit einer Zusammensetzung (A), wobei man diese weiteren, nicht umgesetzten Polymere (A) vor oder nach der Neutralisation oder Teilneutralisation mit den Umsetzungsprodukten der Komponenten (A), (B) und (C) mischt, oder als wäßrige Lösung bzw. Dispersion mit den wäßrigen Lösungen oder Dispersionen mischt, wobei das zugemischte, nicht umgesetzte Polymere (A) von der gleichen oder von anderer Zusammensetzung sein kann wie das zur Umsetzung mit (B) und (C) eingesetzte.

7. Verwendung der Zusammensetzungen nach einem der Ansprüche 1 bis 3 als Vernetzer für Epoxidharze, insbesondere für wassergelöste bzw. wasserdispergierbare Epoxidharze.

8. Verwendung der Zusammensetzungen nach einem der Ansprüche 1 bis 3 als Bindemittel für Beschichtungen auf flächigen harten oder weichen Substraten.

9. Verwendung der Zusammensetzungen nach einem der Ansprüche 1 bis 3 als Klebemittel und Haftkleber.

Patentansprüche für folgende Vertragsstaat: AT

1. Verfahren zur Herstellung von in wäßrigen Lösungen oder Dispersionen lagerstabilen, nach dem Auftrocknen bei Raumtemperatur oder erhöhter Temperatur vernetzenden polymeren Zusammensetzungen, dadurch gekennzeichnet, daß man polymere organische Verbindungen mit Carboxyl-und Carbonylgruppen (Komponente A) mit Polyhydraziden (Komponente B) in Gegenwart von monofunktionellen Monoketonen und/oder Monoaldehyden (Komponente C) in organischen Lösemitteln, die auch in einem Überschuß von Komponente (C) bestehen können, oder in Substanz umsetzt und die erhaltenen Umsetzungsprodukte dann neutralisiert oder teilneutralisiert und in Wasser löst bzw. dispergiert.

2. Verfahren nach Anspruch 1, dadurch gekennzeichnet, daß man Komponente (A) durch Copolymerisation von (Meth-)acrylsäureestern und gegebenenfalls anderen mit (Meth-)acrylsäureestern copolymerisierbaren Verbindungen mit copolymerisierbaren Ketonen und/oder Aldehyden und copolymerisierbaren Carbonsäuren und/oder Carbonsäureanhydriden herstellt.

3. Verfahren nach Anspruch 1 oder 2, dadurch gekennzeichnet, daß man die Polyhydrazide (B) in einem Äquivalenzverhältnis, bezogen auf die Carbonylgruppen in (A), von O,1 bis 1 einsetzt.

4. Verfahren zur Herstellung von in wäßrigen Lösungen oder Dispersionen lagerstabilen, nach dem Auftrocknen bei Raumtemperatur oder erhöhter Temperatur vernetzenden polymeren Zusammetnzungen, dadurch gekennzeichnet, daß man polymere organische Verbindungen mit Carboxyl-und Carbonylgruppen (Komponente A) neutralisiert oder teilneutralisiert, dann mit Polyhydraziden (Komponente B) in Gegenwart von monofunktionellen Monoketonen und/oder Monoaldehyden (Komponente C) umsetzt.

5. Verwendung der nach einem der Ansprüche 1 bis 4 hergestellten Zusammensetzungen als Vernetzer für weitere Polymere (A), wobei man diese weiteren, nicht umgesetzten Polymere (A) vor oder nach der Neutralisation oder Teilneutralisation mit den Umsetzungsprodukten der Komponenten (A), -(B) und (C) mischt, oder als wäßrige Lösung bzw. Dispersion mit den wäßrigen Lösungen oder Dispersionen mischt, wobei das zugemischte, nicht umgesetzte Polymere (A) von der gleichen oder von anderer Zusammensetzung sein kann wie das zur Umsetzung mit (B) und (C) eingesetzte.

6. Verwendung der nach einem der Ansprüche 1 bis 4 hergestellten Zusammensetzungen als Vernetzer für Epoxidharze, insbesondere für wassergelöste bzw. wasserdispergierbare Epoxidharze.

7. Verwendung der nach einem der Ansprüche 1 bis 4 hergestellten Zusammensetzungen als Bindemittel für Beschichtungen auf flächigen harten oder weichen Substraten.

8. Verwendung der nach einem der Ansprüche 1 bis 4 hergestellten Zusammensetzungen als Klebemittel und Haftkleber.